# EUROPÄISCHE PATENTSCHRIFT

(11) **EP 1 872 155 B1**
(45) Veröffentlichungstag und Bekanntmachung des Hinweises auf die Patenterteilung: **29.02.2012**
(21) Anmeldenummer: 06724314.7
(22) Anmeldetag: 13.04.2006
(51) Int. Cl.: G01T 1/202

(54) **LEICHTGEWICHTIGER FLÄCHENDETEKTOR FÜR TEILCHENSTRAHLUNG KONTAMINIERTER OBJEKTE**
LOW-WEIGHT FLAT DETECTOR FOR DETECTING PARTICLE RADIATION OF CONTAMINATED OBJECT PARTICLES
DÉTECTEUR PLAT ET LÉGER POUR DÉTECTER LE RAYONNEMENT DE PARTICULES ISSU D'OBJETS CONTAMINÉS

(30) Priorität: 16.04.2005 DE 102005017557
(43) Veröffentlichungstag der Anmeldung: 02.01.2008
(73) Patentinhaber: Mirion Technologies(RADOS) GmbH, 22761 Hamburg (DE)
(72) Erfinder: KÖLLN, Ingo, 22609 Hamburg (DE); REICHE, Sören, 21635 Jork (DE)
(74) Vertreter: Schildberg, Peter
(86) Internationale Anmeldenummer: PCT/EP2006/003422
(87) Internationale Veröffentlichungsnummer: WO 2006/111323

(56) Entgegenhaltungen:
- EP-A- 0 740 167
- US-A- 5 391 878
- CROW M L ET AL: "Shifting scintillator prototype large pixel wavelength-shifting fiber detector for the POWGEN3 powder diffractometer" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, Bd. 529, Nr. 1-3, 21. August 2004 (2004-08-21), Seiten 287-292, XP004527303 ISSN: 0168-9002
- PATENT ABSTRACTS OF JAPAN Bd. 2002, Nr. 03, 3. April 2002 (2002-04-03) -& JP 2001 311777 A (JAPAN NUCLEAR CYCLE DEVELOPMENT INST STATES OF PROJECTS), 9. November 2001 (2001-11-09)
- PATENT ABSTRACTS OF JAPAN Bd. 1998, Nr. 01, 30. Januar 1998 (1998-01-30) -& JP 09 243752 A (TOSHIBA CORP), 19. September 1997 (1997-09-19)
- PATENT ABSTRACTS OF JAPAN Bd. 016, Nr. 189 (P-1348), 8. Mai 1992 (1992-05-08) & JP 04 024582 A (TOSHIBA CORP), 28. Januar 1992 (1992-01-28)
- "Scintillation Products: Scintillating Optical Fibers"[Online] März 2005 (2005-03), Seiten 1-6, XP002387760 Gefunden im Internet: URL:http://www.detectors.saint-gobain.com/ media/documents/S0000000000000001004/SGC%2 0Scintillating%20Optical%20Fibers%20Brochu re%20605.pdf> [gefunden am 2006-06-29]
- RHODES N J ET AL: "Pixelated neutron scintillation detectors using fibre optic coded arrays", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 392, no. 1-3, 21 June 1997 (1997-06-21), pages 315-318, XP004090976, ISSN: 0168-9002, DOI: 10.1016/S0168-9002(97)00261-1

## Beschreibung

Die folgende Erfindung betrifft einen Ganzkörpermonitor zur Messung radioaktiver α- und β- Strahlung.

Es ist bekannt in der Hochenergiephysik kasettenförmige Szintallationszellen zu verwenden, die beispielsweise aus Scheiben von 5x5 cm und 0,5 cm Dicke bestehen und die mit einer kreisförmigen Nut versehen sind. In die Nut wird eine wellenlängen-schiebende Faser eingesetzt, deren Ende in einem Photomultiplier mündet. Bei wellenlängen-schiebenden Fasern handelt es sich um Kunststoffasern, die eine Verschiebung der Wellenlänge bewirken. Eintretendes Licht, insbesondere über die Längsseite eintretendes Licht, erzeugt neue Lichtblitze in der Faser. Die neu erzeugten Lichtblitze breiten sich innerhalb der Faser aus und gelangen zu deren Ende, von wo aus sie an den Photomultiplier weitergeleitet werden.

Aus US 6,512,231 B1 ist ein Meßgerät bekannt, bei dem eine Faser mit szintillierenden Eigenschaften auf einem Trägerkörper aufgebracht ist. Gemäß einer möglichen Ausgestaltung ist die Faser spiralförmig über den Trägerkörper verteilt und mit beiden Enden an ein lichtempfindliches Gerät angeschlossen. Die an dem lichtempfindlichen Gerät anliegenden Signale werden verstärkt und weitergeleitet.

Aus US 2004/0238749 A1 ist ein Dosiometer bekannt, bei dem das mit einem szintillierenden Material erzeugte Licht über eine Lichtfaser zu einem Photodetektor geführt wird. Hierbei ist vorgesehen, über eine optische Faser, das an der Fläche des Detektors austretende Szintillisationslicht zu dem Photodetektor zu führen und über ein zweites Kabel, das entlang dem Umfang des szintillierenden Materials austretende Szintillationslicht zu dem Photodetektor zu führten.

Aus JP 110447638 ist ein Strahlungsdetektor bekannt, bei dem ein Szintillator für Alpha-Strahlung durch einen Film abgedeckt wird.

Aus Patent Abstracts of Japan Nr. 09243752 sowie JP 9-243752 ist ein Ganzkörpermonitor zur Feststellung von radioaktiver Strahlung bekannt. Der Ganzkörpermonitor besteht aus einem großflächigen Kunststoffszintilator, auf dem eine Vielzahl von dicht beieinander liegenden Lichtleitern angeordnet sind, die mit einem Fotoverstärker verbunden sind. Die Lichtleiter werden jeweils ausgewertet.

Aus Patent Abstracts of Japan Nr. 04024582 sowie JP 2001-311777 ist bekannt, bei einem spiralförmig angeordneten Lichtleiter aus szintillierendem Material die Enden des Lichtleiters an einen Koinzidenzzähler anzuschließen.

Aus US 5,391,878 ist ein Auslesesystem bekannt, das an einem Detektorfeld zeilen- und spaltenweise die Signale ausgelesen werden. Zur Übertragung der Signale werden wellenlängen-schiebende Fasern eingesetzt.

Aus Patent Abstracts of Japan Nr. 2001-311777 ist ein großflächiger Detektor bekannt, bei dem eine Lage von Szintillationsfasem zwischen zwei Lagen von wellenlängen-schiebenden Fasern eingebettet ist.

Aus EP 0 740 167 A1 ist ein Strahlungsmeßgerät bekannt, bei dem eine Szintillationsfaser in einer spezifischen Konfiguration angeordnet ist, um eine hohe Ortsauflösung zu erzielen.

Die Aufgabe der vorliegenden Erfindung besteht darin, einen Ganzkörpermonitor bereitzustellen, der auch bei einem großflächigen Detektormaterial eine gute Signalausbeute bei gleichzeitiger Rauschunterdrückung bietet und eine unabhängige Auswertung einzelner Detektorelemente erlaubt.

Erfindungsgemäß wird die Aufgabe durch einen Ganzkörpermonitor mit den Merkmalen gemäß Anspruch 1 gelöst. Vorteilhafte Ausgestaltungen bilden den Gegenstand der Unteransprüche.

Der erfindungsgemäße Ganzkörpermonitor dient zur Messung radioaktiver Teilchenstrahlung. Der Detektor besitzt mehrere flache Detektorelemente aus einem szintillierenden Material. Jedes der Detektorelemente ist mit genau einem Lichtleiter versehen, der auf mindestens einer Flachseite des Elements verlegt ist und dessen beiden Enden in eine Auswerteeinheit geführt werden. Auf dem Detektorelementen befindet sich also ein durchgehender Lichtleiter, dessen beide Enden von dem Detektorelement aus in eine Auswerteeinheit geführt werden. Der Lichtleiter ist ferner als wellenlängen-schiebende Faser ausgebildet, die auf eine Anregung hin Licht einer anderen Wellenlänge in der Faser erzeugt. Ferner ist der Lichtleiter auf das szintillierende Material geklebt. Hierfür wird bevorzugt ein optisch leitender Kleber verwendet. Die Auswerteeinheit besitzt mindestens einen Photomultiplier und eine Logikeinheit, an der die Signale des oder der Photomultiplier anliegen. Die beiden Enden des Lichtleiters sind jeweils mit einem separaten Photomultiplier oder mit separaten Kanälen eines Photomultipliers verbunden, der bzw. die mit seinen/ihren Ausgangssignalen an der Logikeinheit anliegt. Die Auswerteeinheit erzeugt ein Ausgangssignal für ein Detektorelement nur dann, wenn die zugehörigen Photomultiplier oder die Kanäle des Photomultipliers im wesentlichen gleichzeitig ein Signal erzeugen. Als Photomultiplier im Sinne der Erfindung gelten auch geeignete Halbleiterdioden bzw. Avalanche-Dioden. Es wird also nur für den Fall der Koinzidenz von Signalen an den Ausgängen des Lichtleiters ein Signal erzeugt. Die Koinzidenzzählung, besitzt den Vorteil, dass ein Rauschen in den Signalen unterdrückt wird. Es zeigt sich, dass die Rauschunterdrückung insbesondere bei einem Detektor für einen Ganzkörper-Kontaminationsmonitor, mit dem Personen auf radioaktive Strahlung hin kontrolliert werden können, bei gleicher Messdauer zu besseren Ergebnissen führt. Ferner hat sich herausgestellt, dass der erfindungsgemäße Detektor besonders leicht ausgebildet werden kann, bevorzugt mit einem leichten Kunststoffgehäuse ohne Elektronik.

In einer bevorzugten Ausgestaltung ist das Detektorelement als eine flache Platte ausgebildet, wobei die Dicke des Szintillatormaterials 0,1 bis 1 mm beträgt.

Um Lichtverluste zu vermeiden, ist das Detektormaterial mindestens teilweise mit einem Reflektor umgeben. Bevorzugt ist das Detektormaterial vollständig umschlossen.

In einer bevorzugten Ausgestaltung ist der Lichtleiter bevorzugt als eine wellenlängen-schiebende Faser ausgebildet, deren Absorptionsspektrum sich von dem Emmissionsspektrum unterscheidet. Der Lichtleiter besitzt einen Kern und einen Mantel, die aus unterschiedlichen Kunststoffmaterialien hergestellt sind. Als Material für den Kern sind Polystyrene vorgesehen und als Mantelmaterial Polymethylmethacrylat (PMMA) und/oder fluorierte Polymere (FP). Der Lichtleiter kann mit einem runden Querschnitt oder mit einem eckigem Querschnitt versehen sein, wobei beim eckigem Querschnitt bevorzugt ein viereckiger Querschnitt mit abgerundeten Ecken vorgesehen ist.

Es hat sich herausgestellt, dass in einer bevorzugten Ausgestaltung der Lichtleiter spiralförmig auf dem Detektorelement ausgelegt ist. Dabei ist die Mitte des Lichtleiters im Zentrum der Spirale angeordnet und der Lichtleiter läuft in einer doppelgängigen Spirale zu einer Kante des Detektorelementes.

In einer bevorzugten Ausgestaltung ist der Lichtleiter von dem Detektorelement über zwei transparente Lichtleiter mit dem oder den Photomultipliern verbunden.

In der erfindungsgemäßen Ausgestaltung liegen die Lichtleiter von mehreren Detektoren an einem Photomultiplier oder an einem Kanal eines Photomultipliers an, wobei die Lichtleiter eines Detektors an unterschiedlichen Photomultiplier bzw. deren Kanälen anliegen. Die Ausgänge der Photomultiplier bzw. deren Kanäle sind dann zur Erkennung einer Koinzidenz geschaltet.

Ein besonderer Vorteil der Erfindung besteht darin, dass bei der Verwendung von N Photomulitpliern (oder einem Photomultiplier mit N-Kanälen) insgesamt N (N-1)/ 2 Detektoren unabhängig von einander ausgelesen werden können. Hier können für eine vorgegebene Anzahl von Detektoren deutlich weniger Photomultiplier eingesetzt werden.

Ein bevorzugtes Ausführungsbeispiel wird nachfolgend näher beschrieben. Es zeigt:
- Figur 1: ein Detektorelement mit zwei Photomultipliern und einer logischen Auswerteeinheit,
- Figur 2: eine Skizze mit drei Detektoren und drei Ausgabesignalen und
- Figur 3: die entsprechende Verschaltung für vier Detektoren.

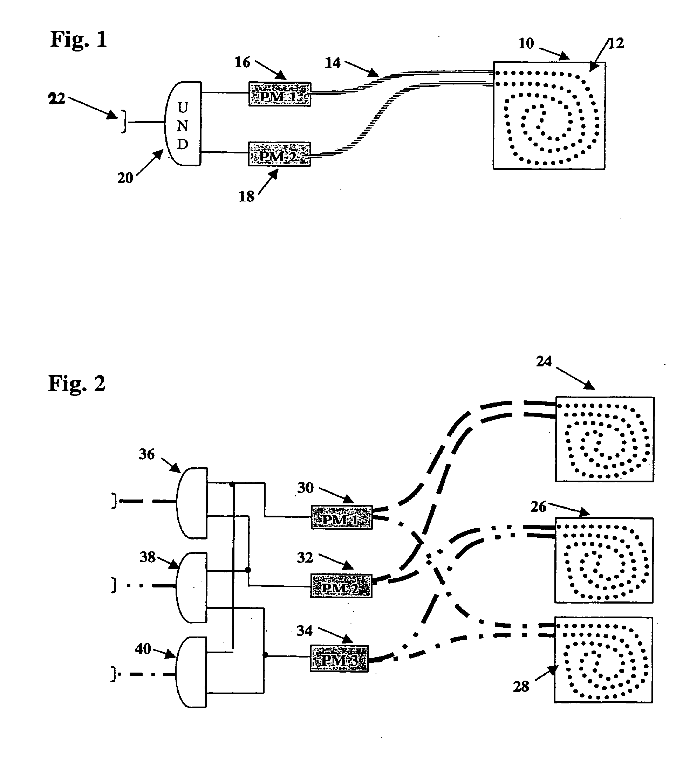

Ein Detektorelement 10 aus Szintillatormaterial besitzt beispielsweise eine Fläche von 200 mm x 200 mm. Die Dicke des Szintillatormaterials kann ungefähr 0,25 mm betragen. Mit dem Szintillatormaterial verklebt ist eine Wls-Faser (Wave length shifting =Wls), die eine Länge von ungefähr 2,5 m bei einer Dicke von 1 mm besitzt. Die Faser ist in eine optische transparente Schicht mit einer Dicke von ungefähr 1 mm eingebettet, die mit dem Szintialltormaterial verbunden ist. Anders ausgedrückt ist die Wls-Faser in ein optisch transparentes Material eingebettet, das als Träger für das Szintillatormaterial dient. Die Wls-Faser besitzt einen Kern aus Polysstyren (PS), das einen Brechungsindex von n = 1,59 besitzt. Der Kern ist mit einem Mantel aus Polymethylmethacrylat (PMMA) versehen, das einen Brechungsindex von 1,49 besitzt. Je nach Ausgestaltung kann um den ersten Mantel noch ein zweiter Mantel vorgesehen sein, der aus einem fluorierten Polymer besteht, dessen Brechungsindex kleiner als der Brechnungsindex des ersten Mantels ist. Der zweite Mantel dient im Wesentlichen dazu, zusätzlich den Austritt von Licht aus dem Wellenleiter zu unterbinden. Die wellenlängen-schiebende Faser kann in einen transparenten Wellenleiter 14 übergehen, der mit einem Photomultiplier 16, 18 verbunden ist. Die Ausgänge der Photomultiplier sind mit einer Auswerteeinheit 20 noch verbunden, die ein Ausgangssignal 22 erzeugt, wenn die Signale der Photomultiplier 16, 18 im Wesentlichen gleichzeitig anliegen. Es wird also eine Koinzidenz der Lichtblitze an den Enden des Lichtleiters 12 bzw. 14 geprüft. Die Koinzidenz stellt sicher, dass das registrierte Ereignis seine Ursache in der Erzeugung eines Lichtblitzes in dem Detektor 10 hat. Das Ausgangssignal 22 der Auswerteeinheit 20 liegt an der Auswerteeinheit beispielsweise für einen Personenkontaminationsdetektor an. Der besondere Vorteil, der in Figur 1 dargestellten Anordnung liegt darin, dass durch die Koinzidenzmessung in der Auswerteeinheit 20 das Rauschen in dem Szintillator und in der Wls-Faser unterdrückt wird.

Ein besonderer Vorteil, der in der Figur 1 dargestellten Anordnung, wird im Zusammenhang mit Figur 2 deutlich. Die Detektoren 24, 26 und 28 sind mit den Photomultipliern 30, 32 und 34 verbunden. Hierbei handelt es sich um genau einen Multianoden-Photomultiplier, der eine Große Anzahl von Kanälen gleichzeitig auslesen kann. In den Figuren sind die Kanäle durch einzelne Boxen dargestellt, auch wenn es unterschiedliche Kanäle eines Gerätes sind. Der Photomultiplier 30 erhält in dem dargestellten Beispiel seine Eingangssignale von den Detektoren 24 und 28, der Photomultiplier 32 von den Detektoren 24 und 26 und der Photomultiplier 34 von den Detektoren 26 und 28. Durch entsprechende Verschaltung hin zu den Logikeinheiten 36, 38 und 40 werden drei getrennte Ausgangssignale jeweils für die einzelnen Detektoren 24, 26 und 28 erzeugt.

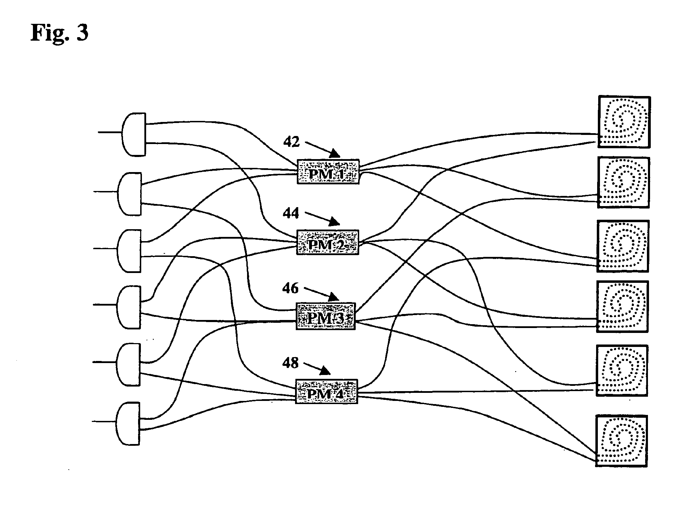

Bei näherer Betrachtung ergibt sich, dass sich für N Photomultiplier maximal die Signale von N (N-1)/ 2 Detektoren vervielfacht und an eine Auswerteeinheit weitergeleitet werden können. In Figur 3 ist beispielhafter die Verdrahtung für vier Photomultiplier 42, 44, 46 und 48 dargestellt. Der obige Zusammenhang zwischen Anzahl der Photomultiplier und Anzahl der möglichen Detektoren ergibt sich ausgehend von den Beispielen in Figur 2 und Figur 3 durch folgende Betrachtung: Wird bei einer Schaltung mit N Photomultiplier ein N+1-ter Photomultiplier hinzugefügt, so kann dieser mit N zusätzlichen Detektoren verbunden werden, indem die Ausgangssignale des N+1-ten Detektors jeweils an den N+1-ten Photomultiplier und an einen der 1 bis N bereits vorhandenen Photomultiplier angeschlossen werden. Die Auswerteeinheiten werden entsprechend verbunden, so dass N (N-1)/ 2+N=(N+1) (N+1-1)/ 2 Detektoren angeschlossen sind.

Diese Anordnung bewirkt, dass bei dem Einsatz von handelsüblichen 16- oder 64-Kanalphotomultipliem somit mit einer Röhre maximal 120 bzw. 2016 unabhängige Detektoren ausgelesen werden können. Die praktische Anzahl der unabhängigen Zählkanäle ist allerdings begrenzt, durch das Verhältnis von Faserdurchmesser zu Pixelgröße als auch durch Totzeiteffekte, die jedoch üblicherweise im Nannosekundenbereich liegen. Insgesamt bedeutet die Verwendung eines Multianoden-Multipliers mit einer großen Anzahl von Kanälen, eine ganz erhebliche Kosteneinsparung.

Die Detektoren werden bei der Radioaktivitätsmessung eingesetzt, insbesondere bei α- und β-Messungen an Personen, aber auch an Werkzeugen oder Gebäudeoberflächen. Üblicherweise werden dafür Gasproportionalzählrohre eingesetzt, die jedoch zunehmend durch Plastikszintillatoren, sogenannte Betaplast-Detektoren ersetzt werden. Bei der vorliegenden Erfindung wird durch die Verwendung einer wellenlängen-schiebenden Kunststoffaser, deren beiden Enden über eine Koinzidenzschaltung ausgelesen werden, das Signal zu Rauschverhältnisse deutlich verbessert. Hinzukommt, dass durch eine mehrfache Beschaltung des Multianoden-Photomultipliers eine große Anzahl von Detektoren gleichzeitig mit einer Elektronik ausgelesen werden kann, so dass sich die Gesamtkosten für das Gerät deutlich reduzieren.

## Patentansprüche

1. Ganzkörpermonitor zur Messung radioaktiver α- und β-Strahlung mit
- mehreren flachen Detektorelementen (10) aus einem szintillierenden Material,
- jedes der Detektorelemente ist mit einem Lichtleiter (12) versehen, der auf mindestens einer Flachseite des Elementes (10) verlegt ist und dessen beide Enden in eine Auswerteeinheit geführt sind und der als wellenlängen-schiebende Faser ausgebildet ist,
- wobei die Auswerteeinheit mehrere Photomultiplier oder einen Photomultiplier mit mehreren Kanälen (16, 18; 30, 32, 34) aufweist und eine Logikeinheit (20; 36, 38, 40), an der die Signale des oder der Photomultiplier anliegen, wobei die Lichtleiter mehrerer Detektoren mit einem Kanal eines Photomultipliers oder mit einem Photomultiplier verbunden sind und
- die Ausgänge des oder der Photomultiplier mit der Logikeinheit verbunden sind, die ein Ausgangssignal für ein Detektorelement erzeugt, wenn die Signale an den Enden des Lichtleiters eines Detektorelements im Wesentlichen gleichzeitig anliegen, wobei mit einer Anzahl von N-Photomultipliern oder einem Photomultiplier mit N-Kanälen insgesamt N(N-1)/2 Detektoren unabhängig voneinander ausgelesen werden können, indem die beiden Enden des Lichtleiters jeweils mit einem separaten Photomultiplier oder einem Kanal eines Photomultiplicrs verbunden sind.

2. Ganzkörpermonitor nach Anspruch 1, **dadurch gekennzeichnet, dass** das Detektorelement (10) als eine flache Platte ausgebildet ist.

3. Ganzkörpermonitor nach Anspruch 1 oder 2, **dadurch gekennzeichnet, dass** das Detektorelement (10) in mindestens einem Bereich mit einem Reflektor versehen ist.

4. Ganzkörpermonitor nach einem der Ansprüche 1 bis 3, **dadurch gekennzeichnet, dass** der Lichtleiter als eine wellenlängen-schiebende Faser ausgebildet ist, deren Absorptionsspektrum sich von dem Emmisionsspektrum unterscheidet.

5. Ganzkörpermonitor nach einem der Ansprüche 1 bis 4, **dadurch gekennzeichnet, dass** der Lichtleiter einen Kern und einen Mantel aufweist, die aus unterschiedlichen Kunststoffmaterialien hergestellt sind.

6. Ganzkörpermonitor nach Anspruch 5, **dadurch gekennzeichnet, dass** der Kern Polystyrene (PS) und der Mantel ein Polymethylmethacrylat (PMMA) und/oder ein fluoriertes Polymer (FP) aufweist.

7. Ganzkörpermonitor nach einem der Ansprüche 1 bis 6, **dadurch gekennzeichnet, dass** der Lichtleiter einen runden Querschnitt besitzt.

8. Ganzkörpermonitor nach einem der Ansprüche 1 bis 7, **dadurch gekennzeichnet, dass** der Lichtleiter einen eckigen Querschnitt mit abgerundeten Ecken aufweist.

9. Ganzkörpermonitor nach einem der Ansprüche 1 bis 8, **dadurch gekennzeichnet, dass** der Lichtleiter (12) spiralförmig auf dem Detektorelement (10) ausgelegt ist.

10. Ganzkörpermonitor nach Anspruch 9, **dadurch gekennzeichnet, dass** die Mitte des Lichtleiters im Zentrum der Spirale angeordnet ist.

11. Ganzkörpermonitor nach einem der Ansprüche 1 bis 10, **dadurch gekennzeichnet, dass** der Lichtleiter (12) von dem Detetktorelement über zwei zuzügliche Lichtleiter (14) mit dem oder den Photomultiplier (16, 18) verbunden ist.

12. Ganzkörpermonitor nach einem der Ansprüche 1 bis 11, **dadurch gekennzeichnet, dass** die Lichtleiter mehrerer Detektoren mit einem Kanal eines Photomultiptiers oder mit einem Photomultiplier verbunden sind, wobei die Lichtleiter eines Detektors an unterschiedlichen Photomultipliern oder deren Kanälen anliegen.

## Claims

1. A whole body monitor for measuring radioactive α and β radiation with
- several flat detector elements (10) made of a scintillating material,
- each of the detector elements is provided with a light conductor (12), which is displaced on at least one flat side of the element (10) and both ends of which are guided into an evaluation unit and which is designed as wave-length-pushing fibers,
- whereby the evaluation unit has several photomultipliers or a photomultiplier with several channels (16, 18; 30, 32, 34) and a logic unit (20; 36, 38, 40), on which the signals of the photomultiplier(s) lie, wherein the light conductors of several detectors are connected with a channel of a photomultiplier or with a photomultiplier and
- the outlets of the photomultiplier(s) are connected with the logic unit, which generates an output signal for a detector element if the signals lie mainly simultaneously on the ends of the light conductor of a detector element, wherein a total of N(N-1)/2 detectors can be read out independently of each other with a number of N photomultipliers or a photomultiplier with N channels in that the two ends of the light conductor are each connected with a separate photomultiplier or a channel of a photomultiplier.

2. The whole body monitor according to claim 1, **characterized in that** the detector element (10) is designed as a flat plate.

3. The whole body monitor according to claim 1 or 2, **characterized in that** the detector element (10) is provided with a reflector in at least one area.

4. The whole body monitor according to one of claims 1 through 3, **characterized in that** the light conductor is designed as a wave-length-pushing fiber, the absorption spectrum of which differs from the emission spectrum.

5. The whole body monitor according to one of claims 1 through 4, **characterized in that** the light conductor has a core and a casing, which are made of different plastic materials.

6. The whole body monitor according to one of claims 1 through 5, **characterized in that** the core has a polystyrene (PS) and the casing a polymethylmethacrylate (PMMA) and/or a fluorinated polymer (FP).

7. The whole body monitor according to one of claims 1 through 6, **characterized in that** the light conductor has a round cross-section.

8. The whole body monitor according to one of claims 1 through 7, **characterized in that** the light conductor has an angular cross-section with rounded corners.

9. The whole body monitor according to one of claims 1 through 8, **characterized in that** the light conductor (12) is designed in a spiral manner on the detector element (10).

10. The whole body monitor according to claim 9, **characterized in that** the middle of the light conductor is arranged in the center of the spiral.

11. The whole body monitor according to one of claims 1 through 10, **characterized in that** the light conductor (12) of the detector element is connected with the photomultiplier(s) (16, 18) via two additional light conductors (14).

12. The whole body monitor according to one of claims 1 through 11, **characterized in that** the light conductors of several detectors are connected with a channel of a photomultiplier or with a photomultiplier, wherein the light conductors of a detector lie on different photomultipliers or their channels.

## Revendications

1. Moniteur pour corps entier pour mesurer le rayonnement α et β radioactif comprenant
plusieurs détecteurs à semi-conducteurs plats (10) composé d'un matériau scintillant,
chacun des détecteurs à semi-conducteurs est muni d'un guide de lumière (12) qui est posé sur au moins une face plate du détecteur (10) et dont les deux extrémités sont guidées dans une unité d'évaluation, et qui se présente sous forme de fibre propulsant les longueurs d'ondes,
l'unité d'évaluation comportant plusieurs photomultiplicateurs ou un photomultiplicateur avec plusieurs canaux (16, 18 ; 30, 32, 34) et une unité logique (20 ; 36, 38, 40) à laquelle sont appliqués les signaux du ou des photomultiplicateur(s), les guides de lumière de plusieurs détecteurs étant reliés à un canal d'un photomultiplicateur ou à un photomultiplicateur et
les sorties du ou des photomultiplicateur(s) sont reliées à l'unité logique, qui produit un signal de sortie pour un détecteur à semi-conducteur, lorsque les signaux sont appliqués essentiellement simultanément aux extrémités du guide de lumière d'un détecteur à semi-conducteur, étant précisé qu'avec un nombre de N photomultiplicateurs ou avec un photomultiplicateur comprenant N canaux, en tout N(N-1)/2 détecteurs peuvent être appelés indépendamment les uns des autres, en reliant chacune des deux extrémités du guide de lumière à un photomultiplicateur séparé ou à un canal d'un photomultiplicateur.

2. Moniteur pour corps entier selon la revendication 1, **caractérisé en ce que** le conducteur à semi-conducteur (10) se présente sous la forme d'une plaque plate.

3. Moniteur pour corps entier selon les revendications 1 ou 2, **caractérisé en ce que** le conducteur à semi-conducteur (10) est muni d'un réflecteur dans au moins une zone.

4. Moniteur pour corps entier selon une des revendications 1 à 3, **caractérisé en ce que** le guide de lumière se présente sous forme de fibre propulsant les longueurs d'ondes, dont le spectre d'absorption se distingue du spectre d'émission.

5. Moniteur pour corps entier selon une des revendications 1 à 4, **caractérisé en ce que** le guide de lumière présente un coeur et une enveloppe qui sont fabriqués dans différents matériaux plastiques.

6. Moniteur pour corps entier selon la revendication 5, **caractérisé en ce que** le coeur présente un polystyrène (PS) et l'enveloppe un polyméthylméthacrylate (PMMA) et/ou un polymère fluoré (FP).

7. Moniteur pour corps entier selon une des revendications 1 à 6, **caractérisé en ce que** le guide de lumière possède une section transversale ronde.

8. Moniteur pour corps entier selon une des revendications 1 à 7, **caractérisé en ce que** le guide de lumière présente une section transversale angulaire avec des angles arrondis.

9. Moniteur pour corps entier selon une des revendications 1 à 8, **caractérisé en ce que** le guide de lumière (12) est conçu en forme de spirale sur le détecteur à semi-conducteur (10).

10. Moniteur pour corps entier selon la revendication 9, **caractérisé en ce que** le milieu du guide de lumière est agencé au centre de la spirale.

11. Moniteur pour corps entier selon une des revendications 1 à 10, **caractérisé en ce que** le guide de lumière (12) est relié par le détecteur à semi-conducteur via deux guides de lumière (14) supplémentaires au photomultiplicateur ou aux photomultiplicateurs (16, 18).

12. Moniteur pour corps entier selon une des revendications 1 à 11, **caractérisé en ce que** les guides de lumière de plusieurs détecteurs sont reliés à un canal d'un photomultiplicateur ou à un photomultiplicateur, les guides de lumière d'un détecteur s'appliquant à différents photomultiplicateurs ou à leurs canaux.
